# EUROPEAN PATENT SPECIFICATION

(11) **EP 3 227 204 B1**
(45) Date of publication and mention of the grant of the patent: **15.01.2020**
(21) Application number: 15817548.9
(22) Date of filing: 20.11.2015
(51) Int. Cl.: B65D 85/804

(54) **CONTAINMENT BODY FOR MAKING A CAPSULE FOR MAKING BEVERAGES AND METHOD FOR MAKING CAPSULES WITH DIFFERENT QUANTITIES OF POWDERED FOOD SUBSTANCE USING A SINGLE TYPE OF CONTAINMENT BODY**
KAPSELKÖRPER UM EINE KAPSEL FÜR DIE ZUBEREITUNG VON GETRÄNKEN ZU HERSTELLEN, VERFAHREN ZU HERSTELLUNG VON KAPSELN MIT UNTERSCHIEDLICHEN MENGEN AN NAHRUNGSPUDDER
CORPS POUR LA PRODUCTION DES CAPSULES POUR LA PREPARATION DES BOISSONS ET METHODE POUR LA PRODUCTION DES CAPSULES AVEC DIFFERENTES QUANTITÉS DE PRODUIT MOULU

(30) Priority: 03.12.2014 IT VR20140302
(43) Date of publication of application: 11.10.2017
(73) Proprietor: Caffitaly System S.P.A., 40041 Gaggio Montano (BO) (IT)
(72) Inventor: ACCURSI, Giovanni, I-40046 Porretta Terme (Bologna) (IT)
(74) Representative: Ponchiroli, Simone
(86) International application number: PCT/IB2015/059015
(87) International publication number: WO 2016/087981

(56) References cited:
- EP-A1- 1 344 722
- WO-A1-2013/060656
- WO-A1-2013/068242
- WO-A1-2014/029884

## Description

This invention relates to a containment body for making a capsule for making beverages that can contain different quantities of powdered food substance, and a method for making capsules with different quantities of powdered food substance using a single type of containment body.

The sector for making beverages using capsules containing a powdered food substance through which hot water is passed after the capsule has been inserted in an extraction chamber of a suitable machine, in recent years has seen considerable evolution which has led to the development of capsules for making many different types of beverages.

Amongst the prior art capsules there are two large families, that in which the powdered food substance is soluble and so comes out completely with the extraction water, and that in which the powdered food substance is not soluble (at least not completely) and making the beverage involves using hot water to extract the flavours from the powdered food substance.

The latter type includes capsules for making espresso coffee or American coffee (obviously not the soluble type).

Aside from the fact that every manufacturer has developed its own type of capsules and corresponding machines, over the years it has also become necessary for the same manufacturer to make capsules that differ according to the type of beverage to be made. In particular, there has been a gradual increase in the need to make capsules of different volume for containing different quantities of powdered food substance. In fact, making different beverages may require different quantities of powdered food substance. For example, while a good espresso coffee can be made using around 8 g of coffee powder, a good American coffee needs around 11 g of coffee powder. More generally, whilst optimal preparation of limited quantities of beverages ("short" beverages such as espresso coffee) may require the use of a relatively small amount of powdered food substance, optimal preparation of larger quantities of beverage ("long" beverages like American coffee, hot chocolate, tea, etc.) normally requires the use of larger quantities of powdered food substance.

Over the years, this problem has brought to the market parallel systems for making beverages, some with relatively small capsules to be used in suitable machines, and others with relatively large capsules for use with different machines dedicated to them.

As regards the structure of the capsules, those of interest for this invention generally comprise a cup-shaped containment body (made with one or more parts), closed at the top by a lid. Inside the containment body, in addition to the powdered food substance, there may be filtering elements that can be positioned either between the powdered food substance and the bottom wall of the containment body, or between the powdered food substance and the lid. Depending on the direction in which the water flows inside the capsule, which in this context is usually from the lid towards the bottom wall or vice versa, the filtering element may act either as a water distributor in the powdered food substance, or as a filter for the beverage coming out to prevent the powdered food substance from accidentally coming out. An example of such a capsule and capsule body is described in EP1344722 A1.

However, the current market situation has several obvious disadvantages.

In particular, any company that wants to be present on the market both with capsules for making "short" beverages and with capsules for making "long" beverages must have two product lines both for the capsules and for the machines.

Similarly, the end user is forced to purchase a machine for each type.

In this context, the technical purpose that forms the basis of this invention is to make a containment body for making a capsule for making beverages and to provide a method for making capsules with different quantities of powdered food substance using a single type of containment body, that overcome the above-mentioned disadvantages.

The technical purpose and the aims indicated are substantially achieved by a containment body for making a capsule for making beverages and a method for making capsules with different quantities of powdered food substance using a single type of containment body, as described in the appended claims.

Further features and the advantages of this invention are more apparent from the detailed description of several preferred, non-limiting embodiments of a containment body for making a capsule for making beverages and of a method for making capsules with different quantities of powdered food substance using a single type of containment body, illustrated with reference to the accompanying drawings, in which:
- Figure 1 is as side view of a first embodiment of a containment body made according to this invention;
- Figure 2 is an axonometric view of the containment body of Figure 1;
- Figure 3 is an axonometric axial cross-section view of a first capsule (for clarity, without the powdered food substance) comprising the containment body of Figure 1;
- Figure 4 is a front view of the capsule of Figure 3;
- Figure 5 shows the capsule of Figure 4 assembled;
- Figure 6 shows the capsule of Figure 3 assembled;
- Figure 7 is a side view of a second embodiment of a containment body made according to this invention;
- Figure 8 is an axonometric view of the containment body of Figure 7;
- Figure 9 is an axonometric axial cross-section view of a second capsule (for clarity, without the powdered food substance) comprising the containment body of Figure 7;
- Figure 10 is a front view of the capsule of Figure 9;
- Figure 11 shows the capsule of Figure 10 assembled;
- Figure 12 shows the capsule of Figure 9 assembled;
- Figures 13 and 14 show the same variant of the capsule respectively of Figures 5 and 6; and
- Figures 15 and 16 show the same variant of the capsule respectively of Figures 11 and 12.

With reference to the above-mentioned figures, the numeral 1 denotes in its entirety a containment body for capsules 2 for making beverages that is made according to this invention.

In fact, at the heart of this invention is the fact that it has provided a containment body 1 able to contain equally well at least two different quantities of powdered food substance, in any case always guaranteeing correct containment of the powder.

Therefore, there follows a description first of the containment body 1 and several different capsule 2 that can be made with it, and then of the method for making them. In any case, it shall be understood that what is described relative to one of them is also valid for the others if compatible.

In general, the containment body 1 comprises a bottom wall 3, a lateral wall 4 connected to the bottom wall 3 at a peripheral portion of the bottom wall 3 and an upper edge 5 connected to the lateral wall 4 on a side opposite to the bottom wall 3. Advantageously, the bottom wall 3 and the lateral wall 4 give the containment body 1 the shape of a cup or a glass.

Depending on requirements, the bottom wall 3, the lateral wall 4 and the upper edge 5, as a whole or individually, may be made of a single piece of material or multiple different pieces of material (for example, to make zones that are less resistant to breaking). However, in the preferred embodiment, at least the lateral wall 4 and the upper edge 5, but advantageously also the bottom wall 3, are at least mainly constituted of a thermoformed thermoplastic material, even more preferably with a multi-layer thermoplastic material comprising at least one layer constituting a barrier to oxygen (such as EVOH).

The upper edge 5 delimits an access opening 6 through which access is possible to an inner space 7 of the containment body 1. The inner space 7 is delimited at the top by the access opening 6, at the bottom by the bottom wall 3 and laterally by the lateral wall 4. In use, a powdered food substance for making a beverage and one or more filtering elements can be inserted in the inner space, as described in more detail below.

In the containment body 1 a central axis can be identified, extending between a central point of the bottom wall 3 and a central point of the access opening 6. It should be noticed that in the context of this description the terms lower and upper are used considering the containment body 1 oriented with the bottom wall 3 at the bottom and the access opening 6 at the top. In any case, it shall be understood that said usage has nothing to do with the orientation of the capsule 2 during use.

According to a first innovative aspect of this invention, the lateral wall 4 is provided with one or more retaining elements 8 that project towards the central axis and lie in a plane substantially perpendicular to the central axis. It should be noticed that, in this context, the definition that the one or more retaining elements 8 lie in a plane substantially perpendicular to the central axis shall be understood in the sense that they all lie in the same annular portion of the lateral wall 4, extending about the central axis substantially on the lateral surface of a virtual disk-shaped element whose main faces are substantially perpendicular to the central axis.

The one or more retaining elements 8 cause a narrowing of the inner space 7 (perpendicularly to the central axis) relative to the portions of lateral wall 4 immediately adjacent to them (along the line parallel to the central axis). Moreover, they define, between them and the bottom wall 3 an undercut seat 9 relative to the line of extension of the central axis. As is described in more detail below, said undercut seat 9, in use, may be used to limit the possibility of movement towards the access opening 6, of an upper filtering element inserted in the capsule 2.

Moreover, according to this invention, the one or more retaining elements 8 are made at a zone of the lateral wall 4 closer to the upper edge 5 than to the bottom wall 3.

Although it is possible for the lateral wall 4 to comprise a single retaining element 8 (that may extend along an entire ring centred on the central axis or along most of such a ring), in the preferred embodiments, the lateral wall 4 is provided with a plurality of retaining elements 8 distributed, preferably evenly, about the central axis in the above-mentioned plane substantially perpendicular to the central axis. Said retaining elements 8 are spaced out and between two successive retaining elements 8 there are portions of the lateral wall 4 that are substantially not deformed.

In the preferred embodiments, the retaining elements 8 are also made by thermoforming simultaneously with production of the containment body 1.

In the embodiments illustrated in the accompanying figures, the lateral wall 4 comprises, going from the bottom wall 3 towards the upper edge 5, a first portion 10 and a second portion 11 with different shapes.

In fact, the first portion 10 is at least mainly frustoconical with the larger base facing towards the second portion 11, whilst the second portion 11 is substantially cylindrical. Moreover, the second portion 11 has a larger internal diameter than the maximum internal diameter of the first portion 10. Consequently, in the connecting zone between the first portion 10 and the second portion 11 the lateral wall 4 defines, at the inner space 7, a radial shoulder 12 that in use limits the possibility of movement of the upper filtering element towards the bottom wall 3.

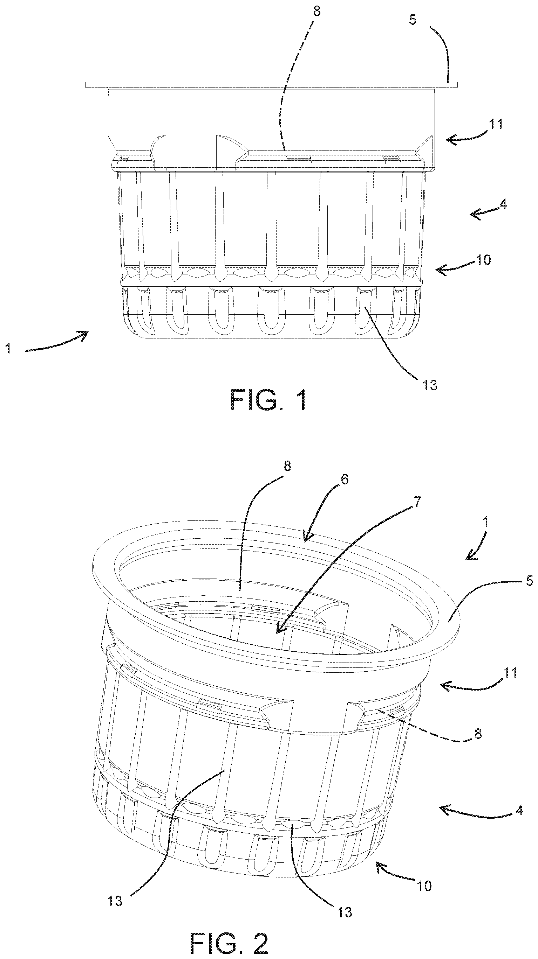

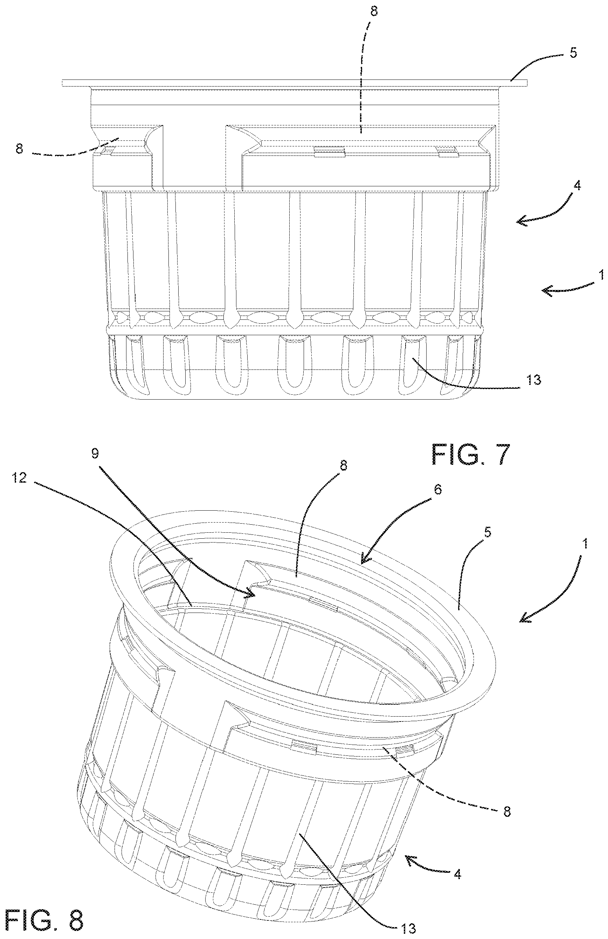

Advantageously, the one or more retaining elements 8 and the undercut seat 9 are all made at the second portion 11. As can be seen by comparing Figures 1 and 7, the position of the one or more retaining elements 8 and of the undercut seat 9 along a line parallel to the central axis may differ depending on the type of filtering element that is to be inserted at the undercut seat 9.

In the preferred embodiments in which the lateral wall 4 is constituted of a multi-layer material with one or more layers made of thermoplastic material, the first portion 10 comprises a plurality of stiffening profiles 13. Furthermore, in the embodiments illustrated in the accompanying figures, at a zone of it closer to the bottom wall 3 than to the access opening 6, the lateral wall 4 also comprises a hooking seat 14 designed in use to allow the correct fixed positioning of a lower filtering element inserted in the capsule 2. In the known way, said hooking seat 14 is formed by a portion of the lateral wall 4 that projects towards the central axis and/or away from the central axis.

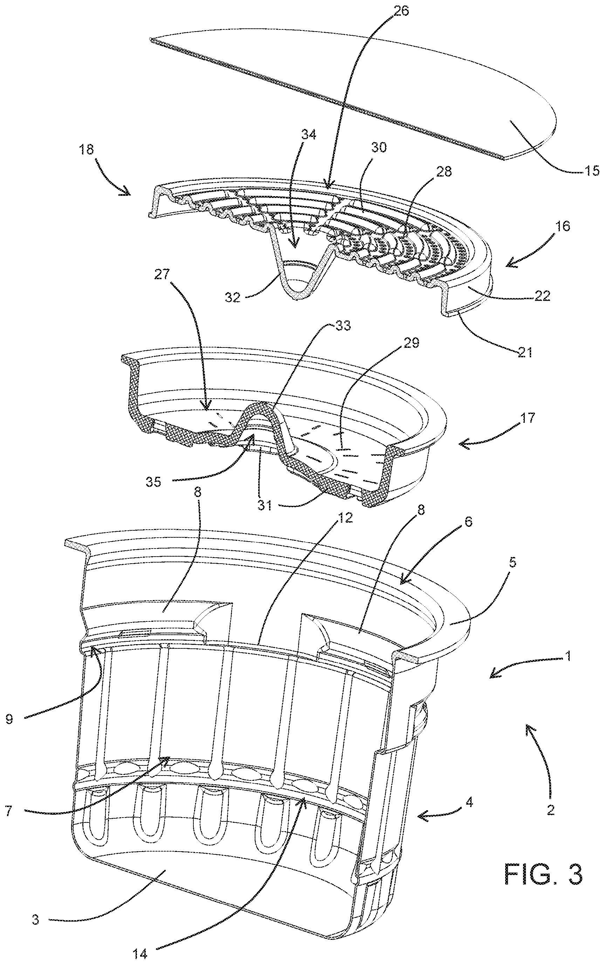

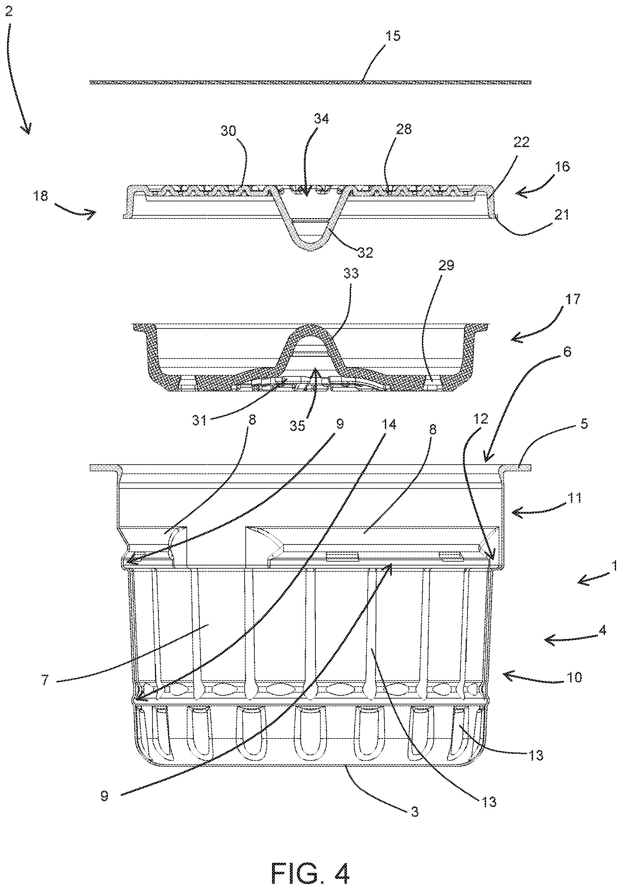

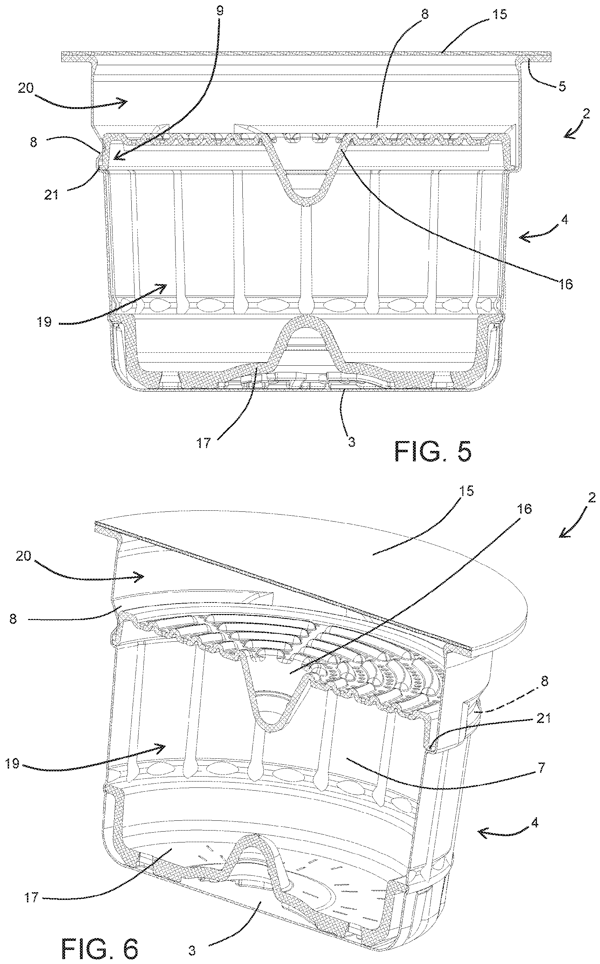

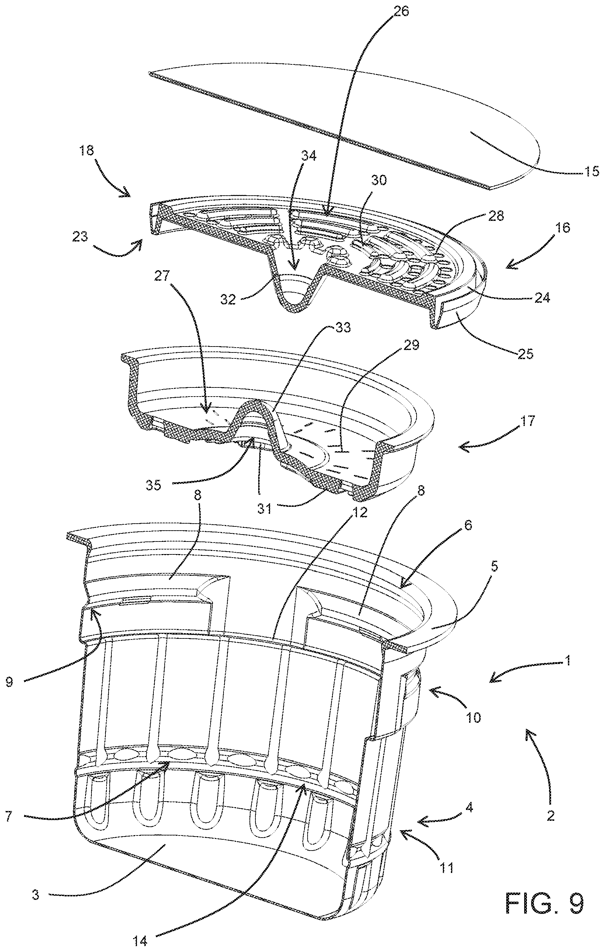

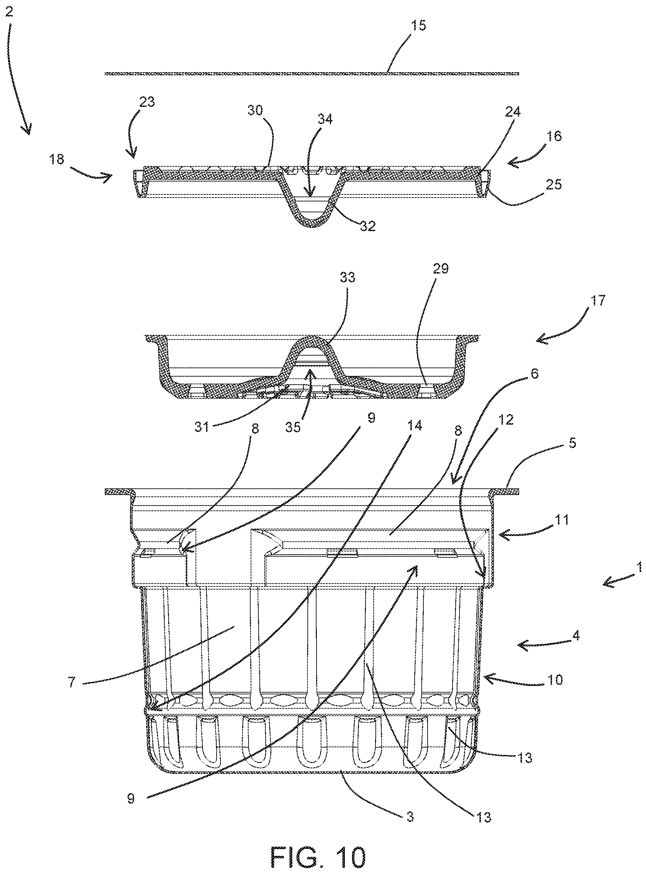

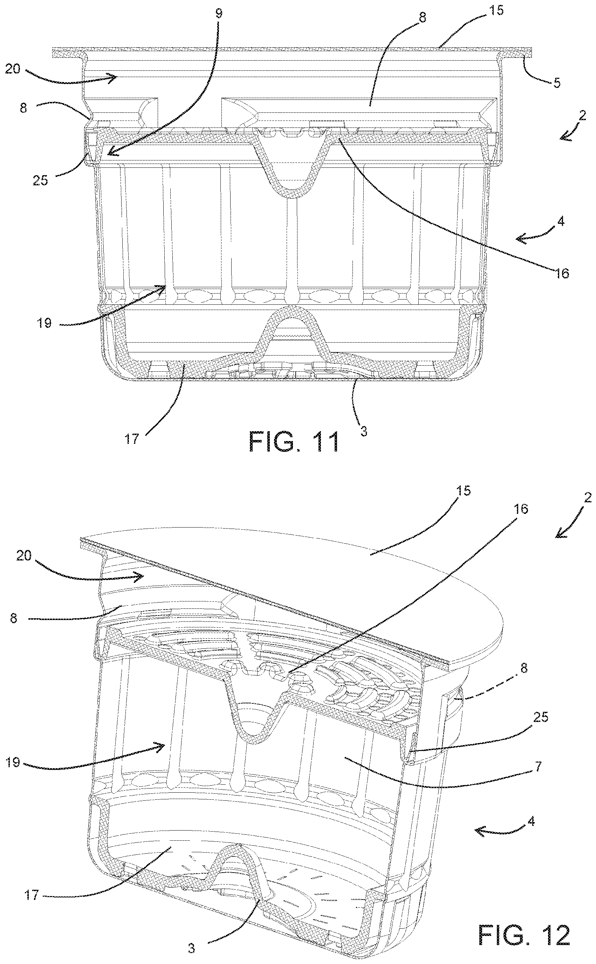

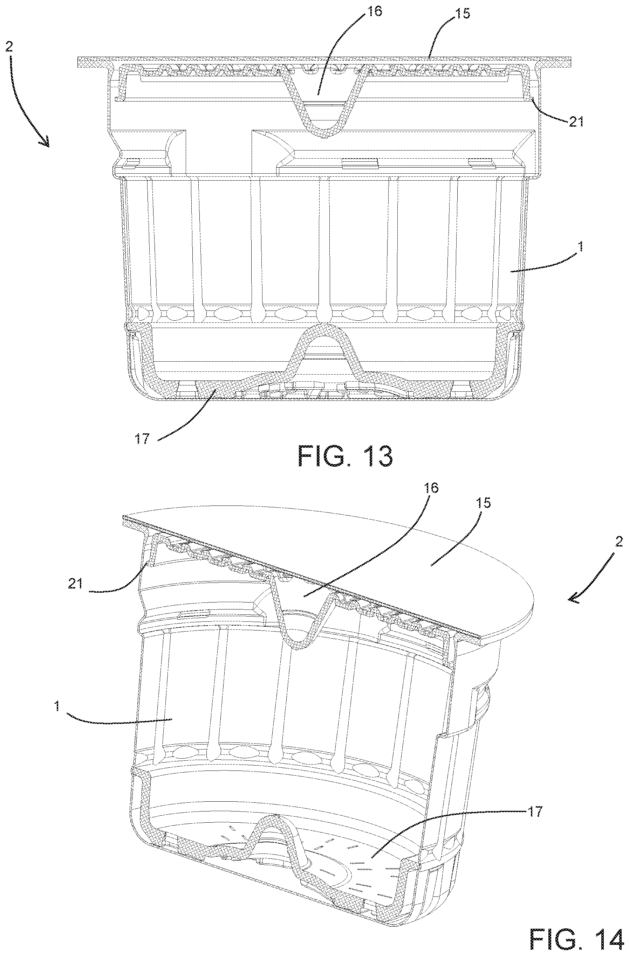

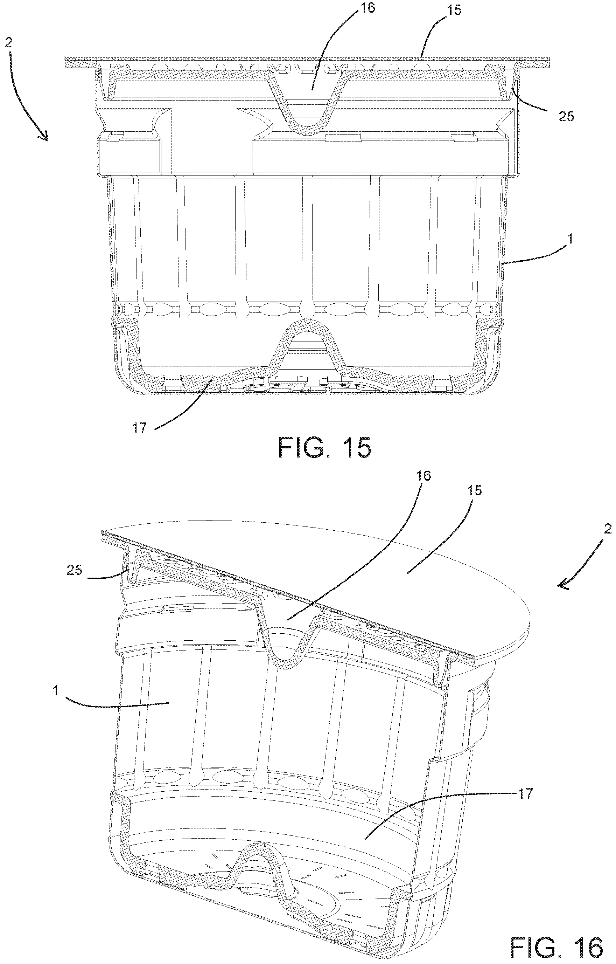

Regarding the different capsules 2 that can be made using the containment body 1 according to this invention, several examples are shown in the accompanying figures, in which Figures 3 to 6 and 13 and 14 respectively show two different capsules 2 that can be made using the containment body 1 of Figure 1 even using the same filtering elements and lid. Similarly Figures 9 to 12 and 15 and 16 respectively show two different capsules 2 that can be made using the containment body of 1 Figure 7 again in this case using the same filtering elements and lid. However, of said capsules 2, only those of Figures 3 to 6 and 9 to 12 are in themselves innovative, since they use the distinctive features of the containment body 1 according to this invention. The capsules of Figures 13 to 16, although using the same containment body 1 as those of Figures 3 to 6 and 9 to 12, have a structure corresponding to that of traditional capsules 2. In fact, as already indicated, a further innovative aspect of this invention is the fact that, thanks to the containment body 1 described above, it has been possible to define a method that, using the same components, allows capsules 2 to be made which contain different quantities of powdered food substance. In the embodiments illustrated, that comprises making a capsule 2 similar to the prior art ones when using a larger quantity of powdered food substance, and instead making the capsule 2 according to this invention when using a smaller quantity of powdered food substance.

In general, a capsule 2 made using the containment body 1 according to this invention also comprises a lid 15 fixed to the upper edge 5 that closes the top of the inner space 7, a powdered food substance contained in the inner space 7 of the containment body 1, and at least an upper filtering element 16 located between the lid 15 and the powdered food substance. Preferably, it may also be provided with a lower filtering element 17, as in the cases illustrated in the accompanying figures, in particular if the beverage must come out of the capsule 2 through the bottom wall 3.

The upper filtering element 16 comprises at least an annular peripheral edge 18 associated with the lateral wall 4, and divides the inner space 7 into a main chamber 19 delimited between the upper filtering element 16 and the bottom wall 3, and into a secondary chamber 20 delimited between the upper filtering element 16 and the lid 15. As indicated above, the powdered food substance is therefore contained in the main chamber 19.

According to the innovative aspect of this invention, the annular peripheral edge 18 of the upper filtering element 16 is coupled to the undercut seat 9 and the one or more retaining elements 8 limit the maximum movement of the upper filtering element 16 towards the lid 15 interacting at least with the annular peripheral edge 18. Advantageously, insertion of the annular peripheral edge 18 of the upper filtering element 16 in the undercut seat 9 is performed in a snap-in fashion. In other words, the upper filtering element 16 is hooked in a snap-in fashion to the one or more retaining elements 8.

In the embodiments illustrated, the annular peripheral edge 18 is advantageously coupled to the retaining elements 8 and/or to the undercut seat 9 with interference so as to increase the liquid seal between the containment body 1 and the upper filtering element 16.

According to a first embodiment of this invention, the annular peripheral edge 18 comprises one or more radial teeth 21 extending in a plane substantially perpendicular to the central axis and which are inserted in the undercut seat 9. The capsule 2 in Figures 3 to 6 shows that embodiment where the annular peripheral edge 18 comprises a single radial tooth 21 forming a ring around the central axis (notice that in the accompanying figures the lower filtering element 17 also has a similar structure). In more detail, the annular peripheral edge 18 comprises an axial portion 22 extending away from a plane perpendicular to the central axis, to which the radial tooth 21 is fixed.

According to a second embodiment of this invention illustrated in Figures 9 to 12, the annular peripheral edge 18 comprises an outer retaining portion 23 which, in a cross-section plane passing through the central axis, comprises an inner first stretch 24 (similar to the axial portion 22 described above) extending away from a plane perpendicular to the central axis, and an outer second stretch 25 which is bent over the first stretch 24 and which together with the first stretch 24 forms a V shape. At least at the second stretch 25 the retaining portion 23 is elastically deformable in such a way as to allow the second stretch 25 to be drawn near to the first stretch 24. Thanks to that shape, the retaining portion 23 is coupled to the lateral wall 4 at the undercut seat 9 in such a way that the retaining portion 23 is elastically deformed and the second stretch 25 is drawn near to the first stretch 24. In fact, in this way, the elastic behaviour of the retaining portion 23 presses the second stretch 25 against the lateral wall 4 increasing the liquid seal between the containment body 1 and the upper filtering element 16. The retaining portion 23 is also advantageously inserted in the undercut seat 9 at least at its own second stretch 25.

As shown in the accompanying figures, and as indicated above, depending on the structure of the upper filtering element 16 used, the axial position of the one or more retaining elements 8 and of the undercut seat 9 of the containment body 1 changes.

Finally, in the embodiments of the accompanying figures, the upper filtering element 16 and the lower filtering element 17 both comprise an inner zone 26, 27 extending at least mainly in a plane perpendicular to the central axis, equipped with through holes 28, 29 and projections 30, 31 (on the opposite side to that in contact with the powdered food substance) and at the centre of which there is a projecting element 32, 33 which forms a recess 34, 35 on the side respectively facing the lid 15 or the bottom wall 3. The recesses 34, 35 are designed to allow the insertion respectively through the lid 15 and the bottom wall 3, of suitable piercing spikes during use of the capsule 2. However, it should be noticed that the recess 34 of the upper filtering element 16 is generally only really useful if the capsule 2 contains the second quantity of powdered food substance. Advantageously, both the upper filtering element 16 and the lower filtering element 17 are constituted of a moulded plastic material. In the case of the upper filtering element 16 the annular peripheral edge 18 extends cantilever-style from the inner zone 26.

Regarding the final innovative aspect of this invention, it consists of the method for making capsules 2 for making beverages containing either a smaller quantity or a larger quantity of the powdered food substance, using a single type of containment body 1 (and advantageously a single type of upper filtering element 16).

That method comprises first the steps of taking a containment body 1 made according to this invention and an upper filtering element 16 comprising at least an annular peripheral edge 18 couplable to the undercut seat 9 of the containment body 1 in such a way that the one or more retaining elements 8 limit the maximum movement of the upper filtering element 16 towards the lid 15.

In this way, as already explained, when the annular peripheral edge 18 is coupled to the undercut seat 9, the upper filtering element 16 divides the inner space 7 into a main chamber 19 delimited between the upper filtering element 16 and the bottom wall 3, and into a secondary chamber 20 delimited between the upper filtering element 16 and the access opening 6. At that point the method comprises two alternatives, depending on the type of capsule 2 to be made:
- either taking a first quantity of powdered food substance which occupies a volume not greater than that of the main chamber 19,
- or, respectively, taking a second quantity of powdered food substance which occupies a volume greater than that of the main chamber 19 and not greater than the sum of the volumes of the main chamber 19 and the secondary chamber 20.

As regards the volume occupied by the powdered food substance, depending on requirements it may be either that occupied by it in an unpressed condition or that occupied by it in a pressed condition. In the latter case, the method will advantageously also comprise a step of pressing the powdered food substance inserted in the containment body 1 that is performed either simultaneously with or after the step of inserting the powdered food substance.

The method then comprises inserting in the inner space 7 the first quantity or respectively the second quantity of powdered food substance, through the access opening 6, and then inserting in the inner space 7, again through the access opening 6, the upper filtering element 16, which will therefore be positioned above the powdered food substance, with the annular peripheral edge 18 facing the lateral wall 4. In more detail, when the quantity of powdered food substance inserted in the capsule 2 is equal to the first quantity, the upper filtering element 16 is inserted in the containment body 1 in such a way that the annular peripheral edge 18 is coupled to the undercut seat 9. In contrast, when the quantity of powdered food substance inserted in the capsule 2 is equal to the second quantity, the upper filtering element 16 is positioned in the inner space 7 close to the access opening 6.

Finally, the method comprises the step of closing the access opening 6 by fixing a lid 15 to the upper edge 5.

In the preferred embodiment of the method according to this invention, the same type of filtering element is used both for making capsules 2 with the first quantity of powdered food substance and for making capsules 2 with the second quantity of powdered food substance.

In particular, as already indicated, the upper filtering element 16 that is used may advantageously comprise an annular peripheral edge 18 that comprises one or more radial teeth 21 that extend in a plane substantially perpendicular to the central axis and that are couplable to the undercut seat 9, or an annular peripheral edge 18 that comprises an outer retaining portion 23 which, in a cross-section plane passing through the central axis, comprises an inner first stretch 24 and an outer second stretch 25 which is bent over the first stretch 24 and which together with the first stretch 24 forms a V shape. Moreover, in the latter case, at least at the second stretch 25 the retaining portion 23 is elastically deformable in such a way as to allow the second stretch 25 to be drawn near to the first stretch 24. In fact, in this way, if the capsule 2 contains the first quantity of powdered food substance, after the step of inserting the upper filtering element 16 in the inner space 7, the retaining portion 23 can be coupled to the lateral wall 4 at the undercut seat 9 in such a way that it elastically deformed with the second stretch 25 near to the first stretch 24. Preferably, however, even if the capsule 2 contains the second quantity of powdered food substance, after the step of inserting the upper filtering element 16 in the inner space 7, the retaining portion 23 is coupled to the lateral wall 4 with the retaining portion 23 elastically deformed and with the second stretch 25 near to the first stretch 24.

In addition, when the quantity of powdered food substance inserted in the capsule 2 is equal to the first quantity, the upper filtering element 16 is preferably inserted in the containment body 1 in such a way that the annular peripheral edge 18 is hooked in a snap-in fashion to the one or more retaining elements 8.

This invention brings important advantages.

In fact, thanks to this invention it has been possible to standardise the production of capsules 2 by always using the same components and varying exclusively the quantity of powdered food substance. Consequently, a containment body and a method have been defined which allow the production of a single system that can be used to make both "long" and "short" beverages of optimum quality.

Finally, it should be noticed that this invention is relatively easy to produce and that even the cost linked to implementing the invention is not very high. The invention described above may be modified and adapted in several ways without thereby departing from the scope of the inventive concept.

## Claims

1. A containment body for making a capsule for making beverages, comprising:
a bottom wall (3);
a lateral wall (4) connected to the bottom wall (3) at a peripheral portion of it; and
an upper edge (5) connected to the lateral wall (4) on a side opposite to the bottom wall (3) and delimiting an access opening (6) for accessing an inner space (7) of the containment body (1), the inner space (7) being delimited at the bottom by the bottom wall (3) and laterally by the lateral wall (4), in use a powdered food substance for making a beverage and one or more filtering elements being insertable in the inner space (7);
a central axis of the containment body (1) being identifiable between a central point of the bottom wall (3) and a central point of the access opening (6);
**characterised in that** the lateral wall (4), in a zone of it closer to the upper edge (5) than to the bottom wall (3) and distanced both from the bottom wall (3) and the upper edge (5), is provided with one or more retaining elements (8) projecting towards the central axis in a plane substantially perpendicular to the central axis, the one or more retaining elements (8) forming between them and the bottom wall (3) an undercut seat (9) relative to the line of extension of the central axis, and the one or more retaining elements (8) causing a narrowing of the inner space (7), perpendicularly to the central axis, relative to the portions of lateral wall (4) which are immediately adjacent to the one or more retaining elements (8) both towards the upper edge (5) and towards the bottom wall (3).

2. The containment body according to claim 1, **characterised in that** the lateral wall (4) is provided with a plurality of said retaining elements (8) which are distributed about the central axis in said plane substantially perpendicular to the central axis, and which are spaced relative to one another.

3. The containment body according to claim 1 or 2, **characterised in that** the lateral wall (4) comprises, from the bottom wall (3) towards the upper edge (5), a first portion (10) and a second portion (11), the first portion (10) at least mainly having a frustoconical shape, and the second portion (11) having a substantially cylindrical shape, the second portion (11) having an internal diameter which is larger than a maximum internal diameter of the first portion (10), and **in that** the one or more retaining elements (8) and the undercut seat (9) are all made at the second portion (11).

4. The containment body according to claim 3, **characterised in that** the first portion (10) comprises a plurality of stiffening profiles (13).

5. The containment body according to any one of the preceding claims, **characterised in that** at a zone of it closer to the bottom wall (3) than to the access opening (6), the lateral wall (4) also comprises a hooking seat (14) formed by a portion of it projecting towards the central axis and/or away from the central axis.

6. The containment body according to any one of the preceding claims, **characterised in that** it is at least mainly constituted of a thermoformed multi-layer material.

7. A capsule for making beverages, containing a powdered food substance which allows a beverage to be made by passing hot water through it, the capsule (2) comprising:
a containment body (1) made according to any one of the preceding claims;
a lid (15) fixed to the upper edge (5) which closes the top of the inner space (7);
said powdered food substance being contained in the inner space (7) of the containment body (1);
at least an upper filtering element (16) comprising at least an annular peripheral edge (18) associated with the lateral wall (4), the upper filtering element (16) dividing the inner space (7) into a main chamber (19) delimited between the upper filtering element (16) and the bottom wall (3), and into a secondary chamber (20) delimited between the upper filtering element (16) and the lid (15), the powdered food substance being contained in the main chamber (19);
**characterised in that** the annular peripheral edge (18) is coupled to said undercut seat (9) and **in that** the one or more retaining elements (8) limit the maximum movement of the upper filtering element (16) towards the lid (15).

8. The capsule according to claim 7, **characterised in that** the annular peripheral edge (18) is coupled to the retaining elements (8) and/or to the undercut seat (9) with interference fit.

9. The capsule according to claim 7 or 8, **characterised in that** the annular peripheral edge (18) comprises one or more radial teeth (21) extending in a plane substantially perpendicular to the central axis and which are inserted in the undercut seat 9.

10. The capsule according to claim 7 or 8, **characterised in that** the annular peripheral edge (18) comprises an outer retaining portion (23) which, in a cross-section plane passing through the central axis, comprises an inner first stretch (24) extending away from a plane perpendicular to the central axis, and an outer second stretch (25) which is bent over the first stretch (24) and which together with the first stretch (24) forms a V shape, at least at the second stretch (25) the retaining portion (23) being elastically deformable in such a way as to allow the second stretch (25) to be drawn near to the first stretch (24), the retaining portion (23) being coupled to the lateral wall (4) at the undercut seat (9) in such a way that the retaining portion (23) is elastically deformed and the second stretch (25) is near to the first stretch (24).

11. The capsule according to claim 10, **characterised in that** the retaining portion (23) is inserted in the undercut seat (9) at least at its own second stretch (25).

12. The capsule according to any one of claims 7 to 11, **characterised in that** the upper filtering element (16) is hooked in a snap-in fashion to the one or more retaining elements (8).

13. A method for making capsules for making beverages, containing a first quantity or a second quantity larger of the first quantity, of at least one powdered food substance which allows a beverage to be made by passing hot water through it, using a single type of containment body (1), comprising the steps of:
taking a containment body (1) made according to any one of claims 1 to 6;
taking at least an upper filtering element (16) comprising at least an annular peripheral edge (18) couplable to the undercut seat (9) in such a way that the one or more retaining elements (8) limit the maximum movement of the upper filtering element (16) towards the lid (15), when the annular peripheral edge (18) is coupled to the undercut seat (9) the upper filtering element (16) dividing the inner space (7) into a main chamber (19) delimited between the upper filtering element (16) and the bottom wall (3), and into a secondary chamber (20) delimited between the upper filtering element (16) and the access opening (6);
taking a first quantity of powdered food substance which occupies a volume not greater than that of the main chamber (19), or respectively a second quantity of powdered food substance which occupies a volume greater than that of the main chamber (19) and not greater than the sum of the volumes of the main chamber (19) and the secondary chamber (20);
inserting in the inner space (7) the first quantity or respectively the second quantity of powdered food substance, through the access opening (6);
then inserting in the inner space (7), through the access opening (6), the upper filtering element (16) above the powdered food substance, positioning the annular peripheral edge (18) so that it is facing the lateral wall (4); and
closing the access opening (6) by fixing a lid (15) to the upper edge (5);
when the quantity of powdered food substance inserted in the capsule (2) is equal to the first quantity, the upper filtering element (16) being inserted in the containment body (1) in such a way that the annular peripheral edge (18) is coupled to the undercut seat (9); whilst
when the quantity of powdered food substance inserted in the capsule (2) is equal to the second quantity, the upper filtering element (16) being positioned close to the access opening (6).

14. The method according to claim 13, **characterised in that** the same type of filtering element is taken both for making capsules (2) with the first quantity of powdered food substance and for making capsules (2) with the second quantity of powdered food substance.

15. The method according to claim 13 or 14, **characterised in that** it comprises the step of taking an upper filtering element (16) whose annular peripheral edge (18) comprises one or more radial teeth (21) extending in a plane substantially perpendicular to the central axis and which are couplable to the undercut seat (9).

16. The method according to claim 13 or 14, **characterised in that** it comprises the step of taking an upper filtering element (16) whose annular peripheral edge (18) comprises an outer retaining portion (23) which, in a cross-section plane passing through the central axis, comprises an inner first stretch (24) and an outer second stretch (25) which is bent over the first stretch (24) and which together with the first stretch (24) forms a V shape, at least at the second stretch (25) the retaining portion (23) being elastically deformable in such a way as to allow the second stretch (25) to be drawn near to the first stretch (24), at least in the case in which the capsule (2) contains the first quantity of powdered food substance, after the step of inserting the upper filtering element (16) in the inner space (7), the retaining portion (23) being coupled to the lateral wall (4) at the undercut seat (9) in such a way that the retaining portion (23) is elastically deformed and the second stretch (25) is near to the first stretch (24).

17. The method according to claim 16, **characterised in that** even in the case in which the capsule (2) contains the second quantity of powdered food substance, after the step of inserting the upper filtering element (16) in the inner space (7), the retaining portion (23) is coupled to the lateral wall (4) with the retaining portion (23) elastically deformed with the second stretch (25) near to the first stretch (24).

18. The method according to claim 17, **characterised in that** when the quantity of powdered food substance inserted in the capsule (2) is equal to the first quantity, the upper filtering element (16) is inserted in the containment body (1) in such a way that the annular peripheral edge (18) is hooked in a snap-in fashion to the one or more retaining elements (8).

## Patentansprüche

1. Ein Kapselkörper zur Herstellung einer Kapsel zur Zubereitung von Getränken, Folgendes umfassend:
eine Bodenwand (3);
eine Seitenwand (4), die an einem Randanteil der Bodenwand (3) mit dieser verbunden ist;
und
eine obere Kante (5), die mit der Seitenwand (4) verbunden ist, an einer Seite, die der Bodenwand (3) gegenüber liegt und eine Zugangsöffnung (6) abgrenzt, um Zugang zu einem Innenraum (7) des Kapselkörpers (1) zu erhalten, der Innenraum (7) ist dabei am Boden durch die Bodenwand (3) und seitlich durch die Seitenwand (4) abgegrenzt, im Gebrauch können dabei ein pulverförmiges Nahrungsmittel zur Zubereitung eines Getränks sowie ein oder mehr Filterelemente in den Innenraum (7) eingeführt werden;
eine Mittelachse des Kapselkörpers (1), welche zwischen einem zentralen Punkt der Bodenwand (3) und einem zentralen Punkt der Zugangsöffnung (6) identifizierbar ist;
**gekennzeichnet dadurch, dass** die Seitenwand (4) in einem Bereich, der näher an der oberen Kante (5) als an der Bodenwand (3) liegt und sich in einem Abstand sowohl von der Bodenwand (3) als auch von der oberen Kante (5) befindet, mit einem oder mehreren Rückhalteelementen (8) ausgestattet ist, welche sich auf einer Ebene, die im Wesentlichen lotrecht zur Mittelachse liegt, in Richtung Mittelachse erstrecken, wobei das eine oder die mehreren Rückhalteelemente (8) gemeinsam und zusammen mit der Bodenwand (3) einen in Bezug auf die Erstreckungslinie der Mittelachse hinterschnittenen Sitz (9) bilden und das eine oder die mehreren Rückhalteelemente (8) eine Verengung des Innenraums (7) lotrecht zur Mittelachse verursachen, in Bezug auf die Anteile der Seitenwand (4), die unmittelbar neben dem einen oder den mehreren Rückhalteelementen (8) liegen, sowohl in Richtung der oberen Kante (5) als auch in Richtung der Bodenwand (3).

2. Der Kapselkörper nach dem Patentanspruch 1, **gekennzeichnet dadurch, dass** die Seitenwand (4) mit einer Mehrzahl besagter Rückhalteelemente (8) ausgestattet ist, welche auf besagter Ebene, die im Wesentlichen lotrecht zur Mittelachse liegt, um die Mittelachse und in gleichem Abstand zueinander verteilt sind.

3. Der Kapselkörper nach den Patentansprüchen 1 oder 2, **gekennzeichnet dadurch, dass** die Seitenwand (4) von der Bodenwand (3) in Richtung oberer Kante (5) einen ersten Abschnitt (10) und einen zweiten Abschnitt (11) umfasst, wobei der erste Abschnitt (10) zumindest hauptsächlich eine kegelstumpfförmige Form hat und der zweite Abschnitt (11) einen Innendurchmesser hat, welcher größer als ein maximaler Innendurchmesser des ersten Abschnitts (10) ist, und dadurch, dass das eine oder die mehreren Rückhalteelemente (8) und der hinterschnittene Sitz (9) alle im zweiten Abschnitt (11) gebildet sind.

4. Der Kapselkörper nach dem Patentanspruch 3, **gekennzeichnet dadurch, dass** der erste Abschnitt (10) eine Mehrzahl von Versteifungsprofilen (13) umfasst.

5. Der Kapselkörper nach jedem der vorherigen Patentansprüche, **gekennzeichnet dadurch, dass** in einem seiner Bereiche, der näher an der Bodenwand (3) als an der Zugangsöffnung (6) ist, die Seitenwand (4) auch einen Sitz zum Einhaken (14) umfasst, welcher durch einen Abschnitt davon gebildet ist, der sich in Richtung Mittelachse und/oder von der Mittelachse weg erstreckt.

6. Der Kapselkörper nach jedem der vorherigen Patentansprüche, **gekennzeichnet dadurch, dass** er zumindest hauptsächlich aus einem durch Thermoformung hergestellten, mehrschichtigen Material besteht.

7. Eine Kapsel zur Zubereitung von Getränken, welche ein pulverförmiges Nahrungsmittel enthält, das es erlaubt, ein Getränk zuzubereiten, indem man heißes Wasser hindurchfließen lässt, die Kapsel (2) umfasst dabei Folgendes:
einen Kapselkörper (1) der gemäß jedem der vorherigen Patentansprüche hergestellt ist; einen Deckel (15), welche an der oberen Kante (5) befestigt ist und die Oberseite des Innenraums (7) schließt;
besagtes pulverförmiges Nahrungsmittel ist dabei im Innenraum (7) des Kapselkörpers (1) enthalten;
mindestens ein oberes Filterelement (16), das mindestens einen ringförmigen Außenrand (18) umfasst, welcher mit der Seitenwand (4) verbunden ist, das obere Fiilterelement (16) teilt dabei den Innenraum (7) in eine Hauptkammer (19), die zwischen dem oberen Filterelement (16) und der Bodenwand (3) begrenzt ist, und in eine Nebenkammer (20), die zwischen dem oberen Filterelement (16) und dem Deckel (15) begrenzt ist, das pulverförmige Nahrungsmittel ist dabei in der Hauptkammer (19) enthalten;
**gekennzeichnet dadurch, dass** der ringförmige Außenrand (18) mit dem genannten hinterschnittenen Sitz (9) verbunden ist und dass das eine oder die mehreren Rückhalteelemente (8) die maximale Bewegung des oberen Filterelements (16) in Richtung Deckel (15) einschränken.

8. Die Kapsel nach dem Patentanspruch 7, **gekennzeichnet dadurch, dass** der ringförmige Außenrand (18) mit den Rückhalteelementen (8) und/oder mit dem hinterschnittenen Sitz (9) überlagert verbunden ist.

9. Die Kapsel nach den Patentansprüchen 7 oder 8, **gekennzeichnet dadurch, dass** der ringförmige Außenrand (18) ein oder mehrere radiale Zähne (21) umfasst, welche sich auf einer Ebene erstrecken, die im Wesentlichen lotrecht zur Mittelachse liegt, und welche in den hinterschnittenen Sitz 9 eingefügt sind.

10. Die Kapsel nach den Patentansprüchen 7 oder 8, **gekennzeichnet dadurch, dass** der ringförmige Außenrand (18) einen äußeren Rückhalteabschnitt (23) umfasst, welcher, auf einer Querschnittebene, die durch die Mittelachse führt, eine innere erste Strecke (24) umfasst, welche sich von einer lotrecht zur Mittelachse stehenden Ebene weg erstreckt, und eine äußere zweite Strecke (25), welche über die erste Strecke (24) gebogen ist und welche zusammen mit der ersten Strecke (24) die Form eines "V" bildet, wobei zumindest auf der zweiten Strecke (25) der Rückhalteabschnitt (23) solcherart elastisch verformbar ist, um zu erlauben, die zweite Strecke (25) zur ersten Strecke (24) hinzuziehen, dabei ist der Rückhalteabschnitt (23) solcherart am hinterschnittenen Sitz (9) mit der Seitenwand (4) verbunden, dass der Rückhalteabschnitt (23) elastisch verformt wird und die zweite Strecke (25) sich nahe an der ersten Strecke (24) befindet.

11. Die Kapsel nach dem Patentanspruch 10, **gekennzeichnet dadurch, dass** der Rückhalteabschnitt (23) zumindest an seiner zweiten Strecke (25) in den hinterschnittenen Sitz (9) eingefügt wird.

12. Die Kapsel nach jedem der Patentansprüche 7 bis 11, **gekennzeichnet dadurch, dass** das obere Filterelement (16) einrastend an dem einen oder den mehreren Rückhalteelementen (8) eingehakt wird.

13. Ein Verfahren zur Herstellung von Kapseln zur Zubereitung von Getränken, welches eine erste Menge oder eine zweite Menge, welche größer als die erste Menge ist, mindestens eines pulverförmigen Nahrungsmittels umfasst, das es erlaubt, ein Getränk zuzubereiten, indem man heißes Wasser durchfließen lässt, wozu eine einzige Art von Kapselkörper (1) verwendet wird, und welches folgende Schritte umfasst:
einen Kapselkörper (1) zu nehmen, der nach jedem der Patentansprüche 1 bis 6 hergestellt ist;
zumindest ein oberes Filterelement (16) zu nehmen, welches mindestens einen ringförmigen Außenrand (18) umfasst, der solcherart mit dem hinterschnittenen Sitz (9) verbindbar ist, dass das eine oder die mehreren Rückhalteelemente (8) die maximale Bewegung des oberen Filterelements (16) in Richtung Deckel (15) einschränken, wenn der ringförmige Außenrand (18) mit dem hinterschnittenen Sitz (9) verbunden ist, dabei teilt das obere Filterelement (16) den Innenraum (7) in eine Hauptkammer (19) welche zwischen dem oberen Filterelement (16) und der Bodenwand eingegrenzt ist, und in eine Nebenkammer (20), welche zwischen dem oberen Filterelement (16) und der Zugangsöffnung (6) eingegrenzt ist;
eine erste Menge eines pulverförmigen Nahrungsmittels zu nehmen, welche ein Volumen einnimmt, das nicht größer als das der Hauptkammer (19) ist, beziehungsweise eine zweite Menge eines pulverförmigen Nahrungsmittels, welche ein Volumen einnimmt, das größer als das der Hauptkammer (19) und nicht größer als die Summe der Volumen der Hauptkammer (19) und der Nebenkammer (20) ist;
die erste Menge beziehungsweise die zweite Menge eines pulverförmigen Nahrungsmittels durch die Zugangsöffnung (6) in den Innenraum (7) einzufügen;
dann durch die Zugangsöffnung (6) das obere Filterelement (16) über dem pulverförmigen Nahrungsmittel in den Innenraum (7) einzusetzen, wobei der ringförmige Außenrand (18) so positioniert wird, dass er zur Seitenwand (4) gerichtet ist; und die Zugangsöffnung (6) zu schießen, indem man einen Deckel (15) an der oberen Kante (5) befestigt; wenn die Menge des pulverförmigen Nahrungsmittels, das in die Kapsel (2) eingefügt wird, gleich der ersten Menge ist, wird das obere Filterelement (16) solcherart in den Kapselkörper (1) eingesetzt, dass der ringförmige Außenrand (18) mit dem hinterschnittenen Sitz (9) verbunden ist; während
wenn die Menge des pulverförmigen Nahrungsmittels, das in die Kapsel (2) eingefügt wird, gleich der zweiten Menge ist, ist das obere Filterelement (16) in der Nähe der Zugangsöffnung (6) positioniert.

14. Das Verfahren nach dem Patentanspruch 13, **gekennzeichnet dadurch, dass** dieselbe Art von Filterelement verwendet wird, um sowohl Kapseln (2) mit der ersten Menge des pulverförmigen Nahrungsmittels herzustellen, als auch, um Kapseln (2) mit der zweiten Menge des pulverförmigen Nahrungsmittels herzustellen.

15. Das Verfahren nach den Patentansprüchen 13 oder 14, **gekennzeichnet dadurch, dass** es den Schritt des Nehmens eines oberen Filterelements (16) umfasst, dessen ringförmiger Außenrand (18) einen oder mehrere radiale Zähne (21) umfasst, welche sich auf einer Ebene, die im Wesentlichen lotrecht zur Mittelachse liegt, erstrecken und welche mit dem hinterschnittenen Sitz (9) verbindbar sind.

16. Das Verfahren nach den Patentansprüchen 13 oder 14, **gekennzeichnet dadurch, dass** es den Schritt des Nehmens eines oberen Filterelements (16) umfsst, dessen ringförmiger Außenrand (18) einen äußeren Rückhalteabschnitt (23) umfasst, der auf einer Querschnittebene, die durch die Mittelachse führt, eine innere erste Strecke (24) und eine äußere zweite Strecke (25) umfasst, die über die erste Strecke (24) gebogen ist und die zusammen mit der ersten Strecke (24) die Form eines "V" bildet, wobei der Rückhalteabschnitt (23) mindestens auf der zweiten Strecke (25) solcherart elastisch verformbar ist, dass es der zweiten Strecke (25) erlaubt wird, zur ersten Strecke (24) hingezogen zu werden, zumindest in dem Fall, wenn die Kapsel (2) die erste Menge des pulverförmigen Nahrungsmittels enthält, nach dem Schritt des Einsetzens des oberen Filterelements (16) in den Innenraum (7), ist der Rückhalteabschnitt (23) dabei am hinterschnittenen Sitz (9) solcherart mit der Seitenwand (4) verbunden, dass der Rückhalteabschnitt (23) elastisch verformt wird und sich die zweite Strecke (25) nahe an der ersten Strecke (24) befindet.

17. Das Verfahren nach dem Patentanspruch 16, **gekennzeichnet dadurch, dass** sogar in dem Fall, wenn die Kapsel (2) die zweite Menge des pulverförmigen Nahrungsmittels enthält, nach dem Schritt des Einsetzens des oberen Filterelements (16) in den Innenraum (7), der Rückhalteabschnitt (23) mit der Seitenwand (4) verbunden ist, wobei der Rückhalteabschnitt (23) elastisch verformt ist und sich die zweite Strecke (25) nahe an der ersten Strecke (24) befindet.

18. Das Verfahren nach dem Patentanspruch 17, **gekennzeichnet dadurch, dass** dann, wenn die Menge des pulverförmigen Nahrungsmittels, das in die Kapsel (2) eingefügt ist, gleich der ersten Menge ist, das obere Filterelement (16) solcherart in den Kapselkörper (1) eingesetzt wird, dass der ringförmige Außenrand (18) einrastend an dem einen oder den mehreren Rückhalteelementen (8) eingehakt ist.

## Revendications

1. Un corps-contenant pour réaliser une capsule pour la préparation de boissons, comprenant :
une paroi de fond (3) ;
une paroi latérale (4) raccordée à la paroi de fond (3) au niveau d'une portion périmétrique de celle-ci ; et
un bord supérieur (5) raccordé à la paroi latérale (4) sur un côté opposé à la paroi de fond (3) et délimitant une ouverture d'accès (6) pour accéder à un espace intérieur (7) du corps-contenant (1), l'espace intérieur (7) étant délimité inférieurement par la paroi de fond (3) et latéralement par la paroi latérale (4), une substance alimentaire en poudre de préparation d'une boisson et un ou plusieurs éléments filtrants pouvant être introduits, lors de l'utilisation, dans l'espace intérieur (7) ;
un axe central du corps-contenant (1) étant identifiable entre un point central de la paroi de fond (3) et un point central de l'ouverture d'accès (6) ; **caractérisé en ce que** la paroi latérale (4), dans une zone respective plus proche du bord supérieur (5) que de la paroi de fond (3) et espacée à la fois de la paroi de fond (3) et du bord supérieur (5), est munie d'un ou de plusieurs éléments de retenue (8) saillant vers l'axe central dans un plan essentiellement perpendiculaire à l'axe central, lesdits un ou plusieurs éléments de retenue (8) formant, entre eux et la paroi de fond (3), un logement en contre-dépouille (9) par rapport à la direction d'extension de l'axe central, et lesdits un ou plusieurs éléments de retenue (8) déterminant un rétrécissement de l'espace intérieur (7), perpendiculairement à l'axe central, par rapport aux portions de paroi latérale (4) qui sont immédiatement adjacentes auxdits un ou plusieurs éléments de retenue (8) à la fois vers le bord supérieur (5) et vers la paroi de fond (3).

2. Le corps-contenant selon la revendication 1, **caractérisé en ce que** la paroi latérale (4) est munie d'une pluralité desdits éléments de retenue (8) qui sont répartis autour de l'axe central dans ledit plan essentiellement perpendiculaire à l'axe central, et qui sont espacés les uns par rapport aux autres.

3. Le corps-contenant selon la revendication 1 ou 2, **caractérisé en ce que** la paroi latérale (4) comprend, de la paroi de fond (3) vers le bord supérieur (5), une première portion (10) et une deuxième portion (11), la première portion (10) ayant au moins principalement une forme tronconique, et la deuxième portion (11) ayant une forme essentiellement cylindrique, la deuxième portion (11) ayant un diamètre intérieur qui est plus grand qu'un diamètre intérieur maximum de la première portion (10), et **en ce que** lesdits un ou plusieurs éléments de retenue (8) et le logement en contre-dépouille (9) sont tous réalisés au niveau de la deuxième portion (11).

4. Le corps-contenant selon la revendication 3, **caractérisé en ce que** la première portion (10) comprend une pluralité de profilés de raidissement (13).

5. Le corps-contenant selon l'une quelconque des revendications précédentes, **caractérisé en ce que**, au niveau d'une zone respective plus proche de la paroi de fond (3) que de l'ouverture d'accès (6), la paroi latérale (4) comprend aussi un logement d'accrochage (14) formé par une portion de celle-ci saillant vers l'axe central et/ou dans une direction opposée à l'axe central.

6. Le corps-contenant selon l'une quelconque des revendications précédentes, **caractérisé en ce qu'**il est au moins principalement constitué par un matériau multicouche thermoformé.

7. Une capsule pour la préparation de boissons, contenant une substance alimentaire en poudre qui permet de préparer une boisson par passage d'eau chaude à travers elle, la capsule (2) comprenant :
un corps-contenant (1) réalisé selon l'une quelconque des revendications précédentes ;
un couvercle (15) fixé au bord supérieur (5) qui ferme le dessus de l'espace intérieur (7) ;
ladite substance alimentaire en poudre étant contenue dans l'espace intérieur (7) du corps-contenant (1) ;
au moins un élément filtrant supérieur (16) comprenant au moins un bord périmétrique annulaire (18) associé à la paroi latérale (4), l'élément filtrant supérieur (16) divisant l'espace intérieur (7) en une chambre principale (19) délimitée entre l'élément filtrant supérieur (16) et la paroi de fond (3), et en une chambre secondaire (20) délimitée entre l'élément filtrant supérieur (16) et le couvercle (15), la substance alimentaire en poudre étant contenue dans la chambre principale (19) ;
**caractérisée en ce que** le bord périmétrique annulaire (18) est accouplé avec ledit logement en contre-dépouille (9) et **en ce que** lesdits un ou plusieurs éléments de retenue (8) limitent le mouvement maximum de l'élément filtrant supérieur (16) vers le couvercle (15).

8. La capsule selon la revendication 7, **caractérisée en ce que** le bord périmétrique annulaire (18) est accouplé avec les éléments de retenue (8) et/ou avec le logement en contre-dépouille (9) par emboîtement par interférence.

9. La capsule selon la revendication 7 ou 8, **caractérisée en ce que** le bord périmétrique annulaire (18) comprend une ou plusieurs dents radiales (21) qui s'étendent dans un plan essentiellement perpendiculaire à l'axe central et qui sont introduites dans le logement en contre-dépouille (9).

10. La capsule selon la revendication 7 ou 8, **caractérisée en ce que** le bord périmétrique annulaire (18) comprend une portion de retenue extérieure (23) qui, dans un plan de section passant par l'axe central, comprend un premier tronçon intérieur (24) s'étendant à l'opposé d'un plan perpendiculaire à l'axe central, et un deuxième tronçon extérieur (25) qui est replié sur le premier tronçon (24) et qui forme, avec ledit premier tronçon (24), une forme en V, au moins au niveau du deuxième tronçon (25) la portion de retenue (23) étant déformable élastiquement de manière à permettre au deuxième tronçon (25) d'être rapproché du premier tronçon (24), la portion de retenue (23) étant accouplée avec la paroi latérale (4) au niveau du logement en contre-dépouille (9) de manière à ce que la portion de retenue (23) soit déformée élastiquement et que le deuxième tronçon (25) soit rapproché du premier tronçon (24).

11. La capsule selon la revendication 10, **caractérisée en ce que** la portion de retenue (23) est introduite dans le logement en contre-dépouille (9) au moins au niveau de son deuxième tronçon (25) respectif.

12. La capsule selon l'une quelconque des revendications de 7 à 11, **caractérisée en ce que** l'élément filtrant supérieur (16) est accroché par encliquetage auxdits un ou plusieurs éléments de retenue (8).

13. Un procédé pour la réalisation de capsules pour la préparation de boissons, contenant une première quantité ou une deuxième quantité plus grande que la première quantité d'au moins une substance alimentaire en poudre qui permet de préparer une boisson par passage d'eau chaude à travers elle, en utilisant un seul type de corps-contenant (1), comprenant les phases consistant à :
prendre un corps-contenant (1) réalisé selon l'une quelconque des revendications de 1 à 6 ;
prendre au moins un élément filtrant supérieur (16) comprenant au moins un bord périmétrique annulaire (18) pouvant être accouplé avec le logement en contre-dépouille (9) de manière à ce que lesdits un ou plusieurs éléments de retenue (8) limitent le mouvement maximum de l'élément filtrant supérieur (16) vers le couvercle (15), quand le bord périmétrique annulaire (18) est accouplé avec le logement en contre-dépouille (9) l'élément filtrant supérieur (16) divisant l'espace intérieur (7) en une chambre principale (19) délimitée entre ce même élément filtrant supérieur (16) et la paroi de fond (3), et en une chambre secondaire (20) délimitée entre l'élément filtrant supérieur (16) et l'ouverture d'accès (6) ;
prendre une première quantité de substance alimentaire en poudre qui occupe un volume non supérieur à celui de la chambre principale (19), ou respectivement une deuxième quantité de substance alimentaire en poudre qui occupe un volume supérieur à celui de la chambre principale (19) et non supérieur à la somme des volumes de la chambre principale (19) et de la chambre secondaire (20) ;
introduire dans l'espace intérieur (7) la première quantité ou respectivement la deuxième quantité de substance alimentaire en poudre, à travers l'ouverture d'accès (6) ;
puis introduire dans l'espace intérieur (7), à travers l'ouverture d'accès (6), l'élément filtrant supérieur (16) au-dessus de la substance alimentaire en poudre, positionner le bord périmétrique annulaire (18) de manière à ce qu'il soit en face de la paroi latérale (4) ; et
fermer l'ouverture d'accès (6) par fixation d'un couvercle (15) sur le bord supérieur (5) ;
quand la quantité de substance alimentaire en poudre introduite dans la capsule (2) est égale à la première quantité, l'élément filtrant supérieur (16) étant introduit dans le corps-contenant (1) de manière à ce que le bord périmétrique annulaire (18) soit accouplé avec le logement en contre-dépouille (9) ; tandis que
quand la quantité de substance alimentaire en poudre introduite dans la capsule (2) est égale à la deuxième quantité, l'élément filtrant supérieur (16) étant positionné à proximité de l'ouverture d'accès (6).

14. Le procédé selon la revendication 13, **caractérisé en ce que** le même type d'élément filtrant est pris tant pour la réalisation de capsules (2) avec la première quantité de substance alimentaire en poudre que pour la réalisation de capsules (2) avec la deuxième quantité de substance alimentaire en poudre.

15. Le procédé selon la revendication 13 ou 14, **caractérisé en ce qu'**il comprend la phase consistant à prendre un élément filtrant supérieur (16) dont le bord périmétrique annulaire (18) comprend une ou plusieurs dents radiales (21) qui s'étendent dans un plan essentiellement perpendiculaire à l'axe central et qui peuvent être accouplées avec le logement en contre-dépouille (9).

16. Le procédé selon la revendication 13 ou 14, **caractérisé en ce qu'**il comprend la phase consistant à prendre un élément filtrant supérieur (16) dont le bord périmétrique annulaire (18) comprend une portion de retenue extérieure (23) qui, dans un plan de section passant par l'axe central, comprend un premier tronçon intérieur (24) et un deuxième tronçon extérieur (25) qui est replié sur le premier tronçon (24) et qui forme, avec ledit premier tronçon (24), une forme en V, au moins au niveau du deuxième tronçon (25) la portion de retenue (23) étant déformable élastiquement de manière à permettre au deuxième tronçon (25) d'être rapproché du premier tronçon (24), au moins dans le cas où la capsule (2) contient la première quantité de substance alimentaire en poudre, après la phase d'introduction de l'élément filtrant supérieur (16) dans l'espace intérieur (7), la portion de retenue (23) pouvant être accouplée avec la paroi latérale (4) au niveau du logement en contre-dépouille (9) de manière à ce que la portion de retenue (23) soit déformée élastiquement et que le deuxième tronçon (25) soit rapproché du premier tronçon (24).

17. Le procédé selon la revendication 16, **caractérisé en ce que** même dans le cas où la capsule (2) contient la deuxième quantité de substance alimentaire en poudre, après la phase d'introduction de l'élément filtrant supérieur (16) dans l'espace intérieur (7), la portion de retenue (23) est accouplée avec la paroi latérale (4) avec cette même portion de retenue (23) déformée élastiquement et avec le deuxième tronçon (25) rapproché du premier tronçon (24).

18. Le procédé selon la revendication 17, **caractérisé en ce que**, quand la quantité de substance alimentaire en poudre introduite dans la capsule (2) est égale à la première quantité, l'élément filtrant supérieur (16) est introduit dans le corps-contenant (1) de manière à ce que le bord périmétrique annulaire (18) soit accroché par encliquetage auxdits un ou plusieurs éléments de retenue (8).
